Europäisches Patentamt

European Patent Office

Office européen des brevets

(11) Publication number: **0 420 483 A2**

# EUROPEAN PATENT APPLICATION

(21) Application number: 90310235.8

(51) Int. Cl.⁵: **H02H 7/093**

(22) Date of filing: **19.09.90**

(30) Priority: **28.09.89 GB 8921920**

(43) Date of publication of application:
**03.04.91 Bulletin 91/14**

(84) Designated Contracting States:
**DE ES FR SE**

(71) Applicant: **DELCO PRODUCTS OVERSEAS CORPORATION**
**3044 West Grand Boulevard**
**Detroit Michigan 48202(US)**

(72) Inventor: **Bates, Trevor**
**25 Bibshall Crescent**
**Dunstable, Bedfordshire LU6 3NF(GB)**

(74) Representative: **Denton, Michael John et al**
**Patent Section Vauxhall Motors Limited 1st**
**Floor Gideon House 26 Chapel Street**
**Luton Bedfordshire LU1 2SE(GB)**

(54) Motor stall sensing circuit.

(57) A stall sensing circuit (12) for an electric motor (10) having an armature, a first input terminal (14) connectable to a power supply, and a ground terminal (18) connected to electrical ground;
the stall sensing circuit comprising a first capacitor (20) connectable to the first input terminal and connected in series with a diode (22), the diode having an input connected to the first capacitor and to electrical ground by way of resistive means (32), and an output connected to a smoothing circuit (24) and to a voltage sensing terminal (30), the stall sensing circuit providing an output signal at the voltage sensing terminal in the form of a dc voltage when the armature of the electric motor is rotating.

## Fig.1.

EP 0 420 483 A2

# MOTOR STALL SENSING CIRCUIT

This invention relates to a stall sensing circuit for an electric motor, and a control circuit for an electric motor incorporating the stall sensing circuit. This invention has particular application for an electric motor which drives the windscreen wipers of a motor vehicle.

In the operation of windscreen wipers, it is known for the wiper blades to either become frozen to the windscreen due to low temperatures or to be prevented from wiping due to the presence of excess snow on the windscreen. In these circumstances, the electric motor driving the windscreen wipers stalls (that is, the armature of the electric motor is prevented from rotating even though power is still being supplied to the electric motor). This causes the electric motor to very quickly overheat, and, if the power supply to the electric motor is not disconnected, can burn out or damage the electric motor.

In order to attempt to overcome the above problem, it is known to provide a temperature sensitive thermotrip (usually in the form of a bi-metal switch) which senses the temperature in the vicinity of the electric motor, and, when a predetermined (excessive) temperature is exceeded, disconnects the power supply to the electric motor. This arrangement has several disadvantages which include a considerable time delay between the electric motor stalling and the thermotrip operating; the requirement for the thermotrip to be in close proximity to the motor windings; and the provision of only a simple open circuit function.

It is an object of the present invention to overcome one or more of the above mentioned disadvantages.

To this end, a stall sensing circuit in accordance with the present invention for an electric motor having an armature, a first input terminal connected to a power supply, and a ground terminal connected to electrical ground; comprises a first capacitor connectable to the first input terminal and connected in series with a diode, the diode having an input connected to the first capacitor and to electrical ground by way of a resistive means, and an output connected to a smoothing circuit and to a voltage sensing terminal, the stall sensing circuit providing an output signal at the voltage sensing terminal in the form of a dc voltage when the armature of the electric motor is rotating.

When power is supplied to an electric motor, the rotation of the armature within the magnetic field generated by the windings of the electric motor generates an ac voltage at the power input brush(es) of the electric motor. This is more especially detectable when an electric motor has two power input brushes, one for high speed, and one for low speed. When power is supplied to one of the power input brushes, an ac voltage is generated at the other power input brush. The present invention makes use of this phenomenon in that the stall sensing circuit senses the presence of this generated ac voltage and provides a dc voltage at its voltage sensing terminal when the armature is rotating, but no voltage when the armature is stationary (as the ac voltage is no longer generated). By incorporating the stall sensing circuit in a suitable control circuit (as detailed below) for the electric motor, as soon as the control circuit detects power being supplied to the electric motor, but no dc voltage (or a dc voltage below a predetermined threshold) at the voltage sensing terminal, the control circuit can disconnect the power supply to the electric motor. Alternatively, the control circuit may reverse the polarity of the power supplied to the electric motor to reverse the electric motor before either disconnecting the power supply or returning the power supplied to the electric motor to its normal operating polarity.

The present invention therefore provides a simple means by which stalling of an electric motor can be detected, and take appropriate action as soon as stall is detected, rather than having to wait for the electric motor to overheat. The components of the stall sensing circuit in accordance with the present invention can be mounted at any convenient location, either on the brush plate of the electric motor or outside the electric motor. In the latter case, stall sensing can be provided for any electric motor which is already in manufacture or in use; that is, assembly techniques for the electric motor do not have to be altered. Further, the stall sensing circuit of the present invention does not affect the power supply to the electric motor, nor the operation of the electric motor.

Preferably, the smoothing circuit comprises a second resistor and a second capacitor connected in parallel between the output of the diode and electric ground.

The resistive means preferably comprises a resistor. Alternatively, the resistive means may comprise a second diode such that the stall sensing circuit acts as a voltage doubling circuit.

For an electric motor having a second input terminal, the second input terminal is preferably for low speed operation of the electric motor with the first input terminal being for high speed operation of the electric motor.

The present invention also includes a control circuit for an electric motor comprising a stall sensing circuit as herein defined, a switch for supplying power to the electric motor, and voltage sensing means connected to the voltage sensing terminal of the stall sensing circuit and to the switch, the voltage sensing means monitoring the position of the switch and the dc voltage at the voltage sensing terminal, and on detecting a stall of the electric motor reversing the polarity of the power supplied to the electric motor and/or disconnecting the power supply to the electric motor.

Preferably, the voltage sensing means comprises a microprocessor.

The control circuit preferably further comprises a relay connected to the voltage sensing means for reversing the polarity of the power supplied to the electric motor on energisation thereof by the voltage sensing means.

The present invention will now be described, by way of example, with reference to the accompanying drawings, in which:-

Figure 1 is a circuit diagram of a first embodiment of stall sensing circuit in accordance with the present invention for an electric motor;

Figure 2 is a circuit diagram of a second embodiment of stall sensing circuit in accordance with the present invention; and

Figure 3 is a circuit diagram of a control circuit in accordance with the present invention, incorporating the stall sensing circuit shown in Figure 2, for an electric motor.

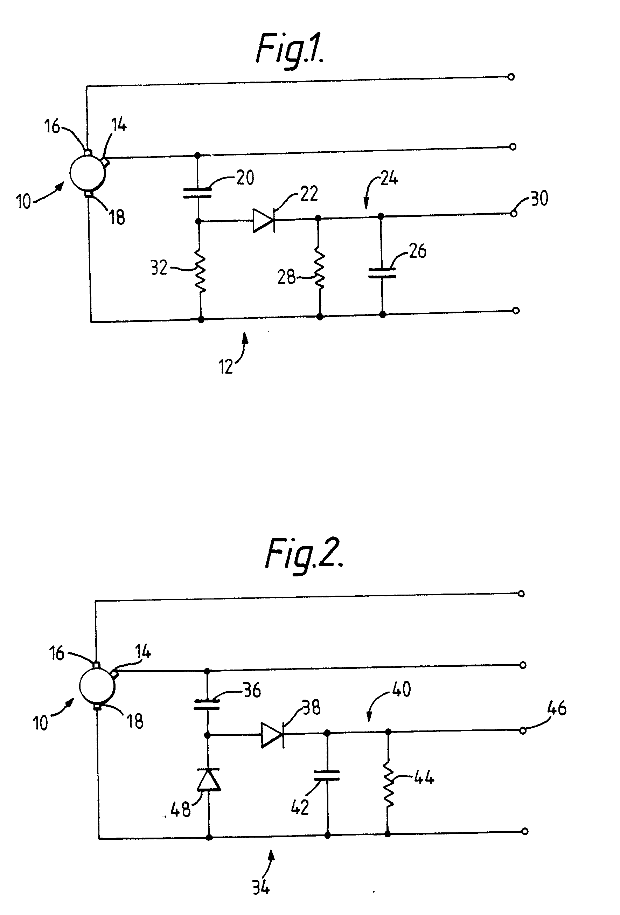

An electric motor 10 is shown in Figure 1 having a stall sensing circuit 12 in accordance with the present invention. The electric motor 10 has a first input terminal 14, a second input terminal 16, and a ground terminal 18. The first input terminal 14 is connectable by way of a switch (not shown) to a power supply for operation of the electric motor 10 at a first (high) speed, and the second input terminal 16 is connectable to the power supply by way of a switch (not shown) for operation of the electric motor at a second (low) speed. The ground terminal 18 is connectable to electrical ground. The first and second input terminals 14,16 are connected to first (high speed) and second (low speed) brushes (not shown) respectively of the electric motor 10.

The stall sensing circuit 12 includes a first capacitor 20 connected with the first input terminal 14 and in series with a diode 22, with the input of the diode connected to the first capacitor. The output of the diode 22 is connected to a smoothing circuit 24 comprising a second capacitor 26 and a first resistor 28 connected in parallel between the output of the diode and electrical ground. The output of the diode 22 is also connected to a voltage sensing terminal 30. Resistive means in the form of a second resistor 32 is connected between the input of the diode 22 and electrical ground.

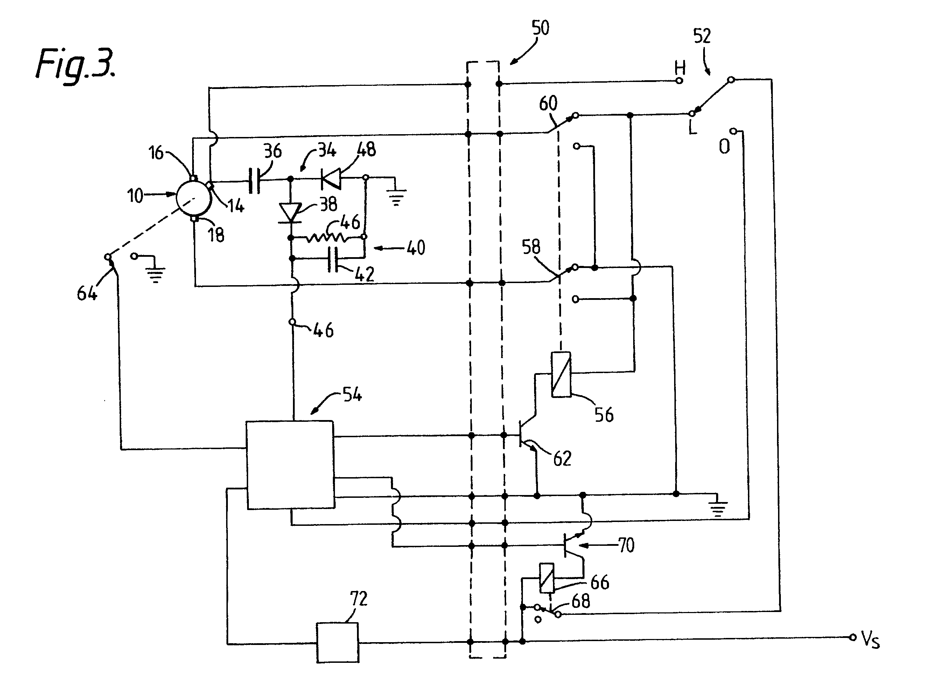

In this particular arrangement, when power is supplied to the second input terminal 16, the armature (not shown) of the electric motor 10 rotates and an ac voltage is generated at the first (high speed) brush and hence at the first input terminal 14. This generated ac voltage is detected by the stall sensing circuit 12. The first capacitor 20 acts to block any dc component of the generated ac voltage, and the first capacitor and the second resistor 32 provide a path for the generated ac voltage to the diode 22. The diode 22 acts as a detector providing current flow in one direction only at its output. This unidirectional current flow creates a potential difference across the first resistor 28 which is smoothed by the second capacitor 26 to give a dc voltage at the voltage sensing terminal 30. When the armature of the electric motor 10 stops rotating, an ac voltage is no longer generated, and the dc voltage at the voltage sensing terminal 30 falls to zero. Voltage sensing means (for example, as shown in Figure 3) monitors the dc voltage at the voltage sensing terminal 30 and the power supply to the electric motor 10. When power is still being supplied, and when the dc voltage at the voltage sensing terminal 30 falls to zero, or drops below a predetermined threshold level, the voltage sensing means acts to disconnect the power supply to the electric motor 10, and hence prevents it overheating.

Suitable values for the above components include 47 uF for the first and second capacitors 20,26; 100K ohms for the first and second resistors 28,32; with the diode 22 being a detector diode such as a 1N4148. During low speed operation of the electric motor 10, the dc voltage at the voltage sensing terminal 30 is typically 3 to 5 volts. The predetermined threshold value is preferably set at 1 volt or below.

Referring now to Figure 2, an electric motor 10 is shown therein having a stall sensing circuit 34 in accordance with a second embodiment of the present invention. The electric motor 10 is as shown in Figure 1.

The stall sensing circuit 34 includes a first capacitor 36 connected with the first input terminal 14 and in series with a first diode 38, with the input of the first diode connected to the first capacitor. The output of the first diode 38 is connected to a smoothing circuit 40 comprising a second capacitor 42 and a resistor 44 connected in parallel between the output of the first diode and electrical ground. The output of the first diode 38 is also connected to a voltage sensing terminal 46. Resistive means in the form of a second diode 48 is connected between the input of the first diode 38 and electrical ground.

In this particular arrangement, the stall sensing circuit acts as a voltage doubler circuit. When power is supplied to the second input terminal 16, the armature (not shown) of the electric motor 10 rotates and an ac voltage is generated at the first (high speed) brush and hence at the first input terminal 14. This generated ac voltage is detected by the stall sensing circuit 34. The first capacitor 36 acts to block any dc component of the generated ac voltage, and also acts as a charge pump. The first capacitor 36 charges during negative voltage transitions of the generated ac voltage via the second diode 48, and discharges into the smoothing circuit 40 during positive voltage transitions via the first diode 38. The second capacitor 42 and the resistor 44 smooth the resultant waveform to give a dc voltage at the voltage sensing terminal 46. As in the arrangement shown in Figure 1, when the armature of the electric motor 10 stops rotating, an ac voltage is no longer generated, and the dc voltage at the voltage sensing terminal 46 falls to zero. Voltage sensing means (for example, as shown in Figure 3) monitors the dc voltage at the voltage sensing terminal 46 and the power supply to the electric motor 10. When power is still being supplied, and when the dc voltage at the voltage sensing terminal 46 falls to zero, or drops below a predetermined threshold level, the voltage sensing means acts to disconnect the power supply to the electric motor 10, and hence prevents it overheating.

Suitable values for the above components include 1.0 uF for the first capacitor 36; 10 uF for the second capacitor 42; 180K ohms for the resistor 44; with the first and second diodes 38,48 being detector diodes such as type no. 1N4148. During low speed operation of the electric motor 10, the dc voltage at the voltage sensing terminal 46 is typically 8 to 10 volts. The predetermined threshold value is preferably set at 1 volt or below.

A control circuit 50 is shown in Figure 3 which incorporates the stall sensing circuit 34 shown in Figure 2. The control circuit 50 includes a switch 52 and relay contacts 68 connected between a power supply $V_s$ and the first and second input terminals 14,16 of the electric motor 10. The switch 52 has terminals H and L for high and low speed operation respectively of the electric motor 10, and a terminal O for off. The control circuit 50 further comprises a voltage sensing means in the form of a microprocessor 54 or other computer and a relay 56 having two sets of contacts 58,60. The microprocessor 54 monitors the position of the switch 52 and the dc voltage at the voltage sensing terminal 46. If the switch 52 is not connected the terminal O (that is, power is being supplied to the electric motor 10), but the dc voltage at the voltage sensing terminal 46 is below the predetermined threshold, the microprocessor 54 registers that the electric motor 10 is in a stall condition. The microprocessor 54 then energises the relay 56 by way of an NPN transistor 62 to move the contacts 58,60. This action reverses the polarity of the power supply to the electric motor 10, thereby putting the electric motor into reverse. The microprocessor 54 can be programmed to reverse the electric motor 10 for a predetermined time and then disconnect the power supply to the electric motor by de-energising a relay 66 associated with relay contacts 68, thereby opening the relay contacts and removing the power supply Vs from the switch 52. During normal operation, that is when no stall condition is detected, the microprocessor 54 maintains a voltage output to a drive (NPN) transistor 70 holding the relay contacts 68 closed via the energised relay 66.

Alternatively, where the electric motor 10 is used to operate windscreen wipers (not shown), the microprocessor 54 may be programmed to monitor the position of the wiper blades (not shown) by way of an inner wipe switch 64 such that when the wiper blades reach the end of their sweep, the microprocessor can de-energise the relay 56 and return the polarity of the power supplied to the electric motor 10 to its normal operating polarity. As a further alternative, one of the relays 56,66 may be omitted to provide "reverse" only or "off" only operation.

The microprocessor 54 is powered from the power supply $V_s$ via a voltage regulator 72. The power supply may be directly connected to the vehicle battery (not shown) or via an ignition switch (not shown).

Whilst the present invention has been described where power is supplied to one power input terminal of the electric motor with the stall sensing circuit connected to the other power input terminal, the present invention will also operate in the case where the stall sensing circuit and the power supply are connected to the same power input terminal (and similarly for an electric motor having only one power input terminal). In this latter case, however, the generated ac voltage, and hence the dc voltage at the voltage sensing terminal, have a reduced value.

## Claims

1. A stall sensing circuit for an electric motor (10) having an armature, a first input terminal (14) connectable to a power supply, and a ground terminal (18) connected to electrical ground; the stall sensing circuit being characterised by a first capacitor (20) connectable to the first input terminal and connected in series with a diode (22), the diode having an input connected to the first capacitor and to electrical ground by way of a resistive means (32), and an output connected to a smoothing circuit (24) and to a voltage sensing terminal (30), the stall sensing circuit providing an output signal at the voltage sensing terminal in the form of a dc voltage when the armature of the electric motor is rotating.

2. A stall sensing circuit as claimed in Claim 1, wherein the smoothing circuit (24) comprises a resistor (28) and a second capacitor (26) connected in parallel between the output of the diode (22) and electric ground.

3. A stall sensing circuit as claimed in Claim 1 or Claim 2, wherein the resistive means comprises a second resistor (32).

4. A stall sensing circuit as claimed in Claim 1 or Claim 2, wherein the resistive means comprises a second diode (48) such that the stall sensing circuit acts as a voltage doubling circuit.

5. A stall sensing circuit as claimed in any one of Claims 1 to 4 for an electric motor (10) having a second input terminal (16), the second input terminal being for low speed operation of the electric motor and the first input terminal (14) being for high speed operation of the electric motor.

6. A control circuit for an electric motor (10) comprising a stall sensing circuit as claimed in any one of claims 1 to 4, a switch (52) for supplying power to the electric motor, and voltage sensing means (54) connected to the voltage sensing terminal (46) of the stall sensing circuit and to the switch, the voltage sensing means monitoring the position of the switch and the dc voltage at the voltage sensing terminal, and on detecting a stall of the electric motor reversing the polarity of the power supplied to the electric motor and/or disconnecting the power supply to the electric motor.

7. A control circuit as claimed in Claim 6, wherein the voltage sensing means comprises a microprocessor (54).

8. A control circuit as claimed in Claim 6 or Claim 7, further comprising a relay (56) connected to the voltage sensing means (54) for reversing the polarity of the power supplied to the electric motor (10) on energisation thereof by the voltage sensing means.

## Fig.1.

## Fig.2.

Fig.3.